# EUROPÄISCHE PATENTSCHRIFT

(11) **EP 2 213 884 B1**
(45) Veröffentlichungstag und Bekanntmachung des Hinweises auf die Patenterteilung: **02.11.2011**
(21) Anmeldenummer: 09013734.0
(22) Anmeldetag: 31.10.2009
(51) Int. Cl.: F15B 15/26, F15B 19/00

(54) **Klemmeinheit und Verfahren zum Überwachen der Klemmkraft bei einer solchen**
Clamp unit and method for monitoring the clamping power of the same
Unité de serrage et procédé de surveillance de la force de serrage d'une telle unité de serrage

(30) Priorität: 02.02.2009 DE 102009007107
(43) Veröffentlichungstag der Anmeldung: 04.08.2010
(73) Patentinhaber: SITEMA GmbH & Co. KG, 76135 Karlsruhe (DE)
(72) Erfinder: Back, Gunnar, 76547 Sinzheim (DE); Betz, Willi, 76287 Rheinstetten (DE)
(74) Vertreter: Lemcke, Brommer & Partner

(56) Entgegenhaltungen:
- DE-A1- 19 736 132
- DE-A1-102004 009 837

## Beschreibung

Die vorliegende Erfindung betrifft ein Verfahren nach dem Oberbegriff des Patentanspruchs 1 zum Überwachen einer Klemmung bewirkenden Federkraft bei einer Klemmeinheit für ein zu klemmendes Bauteil, insbesondere Stange, mit einem an dem zu klemmendem Bauteil angeordneten inneren Klemmelement und mit einem koaxial zu dem inneren Klemmelement angeordneten und mit dem inneren Klemmelement selektiv klemmend zusammenwirkenden äußeren Klemmelement, wobei das innere und/oder das äußere Klemmelement zum Lösen oder zum Schließen der Klemmeinheit relativ zu dem jeweils anderem Klemmelement gegen die Klemmung bewirkende Federmittel axial verschoben wird.

Weiterhin betrifft die vorliegende Erfindung eine Klemmeinheit nach dem Oberbegriff des Patentanspruchs 9 für ein zu klemmendes Bauteil, insbesondere Stange, mit einem an dem zu klemmenden Bauteil angeordneten inneren Klemmelement, welches insbesondere als Außenkonus ausgebildet ist, und einem koaxial zu dem inneren Klemmelement angeordneten und mit dem inneren Klemmelement selektiv klemmend zusammenwirkenden äußeren Klemmelement, welches insbesondere als zu dem Außenkonus komplementärer Innenkonus ausgebildet ist, wobei das äußere Klemmelement und/oder das innere Klemmelement zum Lösen oder Schließen der Klemmeinheit relativ zu dem jeweils anderen Klemmelement gegen die Klemmung bewirkende Federmittel axial verschiebbar ist.

Gattungsgemäße Klemmeinheiten sind dem Fachmann bekannt. Bei derartigen Klemmeinheiten ist regelmäßig an einer zu klemmenden Stange ein inneres Klemmelement angeordnet, welches als Außenkonus ausgebildet ist. Um das innere Klemmelement herum ist ein weiteres, äußeres Klemmelement koaxial angeordnet, welches komplementär zu dem inneren Klemmelement als Innenkonus ausgebildet ist. Wenn an das äußere Klemmelement axial auf den Außenkonus aufgeschoben wird, was regelmäßig nach Maßgabe entsprechender Federmittel geschieht, kommt es zu einer Klemmung zwischen den beiden Klemmelementen, wobei das innere Klemmelement gegen das zu klemmende Bauteil gepresst wird und dieses durch Reibung abbremst bzw. klemmt. Um die Klemmung zu lösen, wird das äußere Klemmelement entgegen der Federkraft mittels einer Kolbenanordnung, eines so genannten Lösekolbens, verschoben, welche entsprechend über ein geeignetes Druckmedium, wie ein Hydrauliköl oder dergleichen, mit Druck beaufschlagt wird.

Weiterhin sind aus dem Stand der Technik so genannte selbst verstärkende Klemmeinheiten bekannt, bei welchen das äußere Klemmelement als Teil eines feststehenden Gehäuses ausgebildet ist, in welchem das innere Klemmelement nach Maßgabe entsprechender Federmittel verschiebbar ist. Dabei wirken die Federmittel in Lastrichtung, und das kommt im Lastfall zu einer sich selbst verstärkenden Klemmung.

Bei den meisten Klemmeinheiten wird also die Klemmkraft zumindest teilweise durch die genannten Federmittel erzeugt. Bei den genannten selbst verstärkenden Systemen ist dies zumindest die Anlagekraft des Klemmsystems, d. h. des inneren Klemmelements, an das zu klemmende Bauteil (die Stange).

Ein besonderes Sicherheitsproblem von Klemmeinheiten, bei denen Federn zum Bewirken der Klemmung verwendet werden, ist der Federbruch, womit ein plötzlicher Verlust bzw. eine Reduzierung der Klemmkraft oder Klemmwirkung einhergeht. Bei den vorbekannten Klemmeinheiten wird ein solcher Federbruch frühestens bei der nächsten Sicherheitsüberprüfung der Klemmeinheit oder sogar erst beim nächsten Einsatz der Klemmung bemerkt, was unter Umständen fatale Folgen haben kann.

Das Dokument DE 102 004 009 873 offenbart ein Verfahren zum Überwachen einer Klemmung bei einer Klemmeinheit mit den Merkmalen des Oberbegriffes des Anspruchs 1 und 9.

Der Erfindung liegt die Aufgabe zugrund, ein Verfahren bzw. eine Klemmeinheit der jeweils eingangs genannten Art dahingehend weiterzuentwickeln, dass laufend eine Überprüfung der Federkraft und damit der Funktionsfähigkeit der Klemmeinheit durchführbar ist, um die genannten negativen Folgen zu vermeiden.

Die Aufgabe wird gelöst durch ein Verfahren mit den Merkmalen des Patentanspruchs 1 und durch eine Klemmeinheit mit den Merkmalen des Patentanspruchs 9.

Vorteilhafte Weiterbildungen der Erfindung sind jeweils im Gegenstand von Unteransprüchen, deren Wortlaut hiermit durch ausdrückliche Bezugnahme in die Beschreibung aufgenommen wird, um unnötige Textwiederholungen zu vermeiden.

Erfindungsgemäß ist ein Verfahren zum Überwachen einer Klemmung bewirkenden Federkraft bei einer Klemmeinheit für ein zu klemmendes Bauteil, insbesondere Stange, mit einem an dem zu klemmenden Bauteil angeordneten inneren Klemmelement und mit einem koaxial zu dem inneren Klemmelement angeordneten und mit dem inneren Klemmelement selektiv klemmend zusammenwirkenden äußeren Klemmelement, wobei das äußere Klemmelement und/oder das innere Klemmelement relativ zu dem jeweils anderen Klemmelement zum Lösen der Klemmeinheit gegen die Klemmung bewirkende Federmittel oder zum Schließen der Klemmeinheit durch die genannten Federmittel axial verschoben wird, **dadurch gekennzeichnet, dass** beim axialen Verschieben des inneren Klemmelements und/oder des äußeren Klemmelements in einer vorbestimmten Stellung des verschobenen Klemmelements die Federkraft der Federmittel relativ zu einem vorgegebenen Schwellwert bestimmt wird und dass zumindest bei Unterschreiten des Schwellwerts für die Federkraft ein Steuersignal zum Anzeigen eines Betriebszustands, insbesondere einer Funktionsstörung, der Klemmeinheit erzeugt wird.

Vorrichtungstechnisch ist eine Klemmeinheit für ein zu klemmendes Bauteil, insbesondere Stange, mit einem an dem zu klemmenden Bauteil angeordneten inneren Klemmelement, welches insbesondere als Außenkonus ausgebildet ist, und mit einem koaxial zu dem inneren Klemmelement angeordneten und mit dem inneren Klemmelement selektiv klemmend zusammenwirkenden äußeren Klemmelement, welches insbesondere als zu dem Außenkonus komplementärer Innenkonus ausgebildet ist, wobei das äußere Klemmelement und/oder das innere Klemmelement relativ zu dem jeweils anderen Klemmelement zum Lösen der Klemmeinheit gegen die Klemmung bewirkende Federmittel oder zum Schließen der Klemmeinheit durch die genannten Federmittel axial verschiebbar ist, gekennzeichnet durch Mittel zum Bestimmen der Federkraft relativ zu einem vorgegebenen Schwellwert in einer vorbestimmten Stellung des verschobenen Klemmelements beim axialen Verschieben des inneren Klemmelements und/oder des äußeren Klemmelements und durch Mittel zum Erzeugen eines Steuersignals zum Anzeigen eines Betriebszustands, insbesondere einer Funktionsstörung, zumindest bei einem Unterschreiten des Schwellwerts für die Federkraft.

Erfindungsgemäß ist demnach vorgesehen, dass beim axialen Verschieben des inneren oder des äußeren Klemmelements - je nach Art der betreffenden Klemmeinheit - gegen die Federmittel oder durch die Federmittel, d. h. beim Lösen bzw. beim Schließen der Klemmung des Klemmelements in einer vorbestimmten Stellung des verschobenen Klemmelements die Federkraft bestimmt wird, wobei die Bestimmung der Federkraft relativ zu einem vorgegebenen Schwellwert erfolgt. Zumindest bei einem Unterschreiten des Schwellwerts für die Federkraft, d. h. wenn die ermittelte Federkraft in der vorbestimmten Stellung des betreffenden Klemmelements nicht ausreichend stark ist, wird erfindungsgemäß ein Steuersignal erzeugt, welches zum Anzeigen eines Betriebszustands der Klemmeinheit, vorliegend also insbesondere zum Anzeigen einer Funktionsstörung der Klemmeinheit, verwendet werden kann.

Auf diese Weise ist eine Überwachung der Klemmeinheit laufend während des Betriebs möglich, und die eingangs erwähnten möglicherweise fatalen Folgen eines Ausfalls der Klemmeinheit werden vermieden.

Die Bestimmung der Federkraft kann unmittelbar über eine Kraftmessung erfolgen, beispielsweise mittels eines Dehnungsmessstreifens oder eines piezoelektrischen Sensors. Alternativ kann die Kraftmessung in einfacher und kostengünstiger Weise anhand einer abgeleiteten Messgröße und insbesondere über eine Druckmessung vorgenommen werden, da ein zum Verschieben beispielsweise des äußeren Klemmelements entgegen der Federkraft benötigter zunehmender Druck des genannten Druckmediums beim Lösen der Klemmung ein Maß für die zu überwachende Federkraft darstellt.

Umgekehrt verhält es sich beim Schließen einer gattungsgemäßen Klemmeinheit zum Bewirken der Klemmung. Dort entsteht ein Druckabfall des Druckmediums, welcher zur erfindungsgemäßen Bestimmung der Federkraft bewacht bzw. bestimmt wird. Gegebenenfalls ist zu diesem Zweck in einer Zuleitung für das Druckmedium eine geeignete Drosseleinrichtung vorzusehen, um den Druckabfall zeitlich zu verzögern.

Im Zuge einer bevorzugten Weiterbildung des erfindungsgemäßen Verfahrens lässt sich die vorbestimmte Stellung des äußeren Klemmelements in einfacher Weise bestimmten, indem ein Grenztaster, z. B. in Form eines Näherungssensors oder Näherungsschalters, verwendet wird, welcher mit dem verschobenen Klemmelement zusammenwirkt und beim Erreichen einer bestimmten Stellung dieses Klemmelements anspricht. Der genannte Grenztaster kann insbesondere als induktiver Näherungssensor ausgebildet sein und stellt in jedem Fall ein entsprechendes Näherungssignal bereit, welches im Rahmen der vorliegenden Erfindung zu Steuerungszwecken nutzbar ist. Alternativ kann der Grenztaster auch mechanisch oder optisch arbeiten und/oder an einem mit dem betreffenden Klemmelement zusammenwirkenden weiteren Element, insbesondere einem Lösekolben, angeordnet sein.

Die Federkraft in der zu überwachenden Klemmeinheit wird jedoch vorzugsweise unabhängig von der vorbestimmten Stellung des verschobenen Klemmelements bestimmt bzw. gemessen. Das bedeutet, dass die Kraft- oder Druckbestimmung bzw. -messung insbesondere zeitlich betrachtet nicht unmittelbar gerade dann erfolgen muss, wenn das betreffende Klemmelement die vorbestimmte Stellung erreicht.

Wie bereits erwähnt, kann im Zuge einer Weiterbildung des erfindungsgemäßen Verfahrens die Federkraft durch eine über einen gewissen Wertebereich kontinuierlich messende Kraftmesseinrichtung direkt gemessen werden. Alternativ kann auch die Verwendung einer als Schwellwertschalter arbeitenden Kraftbestimmungseinrichtung vorgesehen sein, welche beim Erreichen des vorgegebenen Kraftschwellwerts ein entsprechendes Kraftsignal bereitstellt. Dieses Kraftsignal gibt im einfachsten Fall also lediglich an, dass der vorgegebenen Kraftschwellwert erreicht wurde.

Bevorzugt wird die Federkraft jedoch - wie erwähnt - durch eine über einen gewissen Wertebereich kontinuierlich messende Druckmesseinrichtung gemessen werden, was sich in der Praxis einfacher und damit kostengünstiger realisieren lässt als die direkte Kraftmessung. Höchst vorzugsweise kann dabei analog zu dem oben Gesagten die Verwendung einer als Schwellwertschalter arbeitenden Druckbestimmungseinrichtung vorgesehen sein, welche beim Erreichen des vorgegebenen Druckschwellwerts ein entsprechendes Drucksignal bereit stellt. Analog zu der weiter oben beschriebenen Kraftbestimmungseinrichtung zeigt die Druckbestimmungseinrichtung also lediglich an, dass ein vorgegebener Druckschwellwert und entsprechend eine bestimmte Federkraft erreicht wurde.

Auf diese Weise ist es leicht möglich, das erfindungsgemäße Verfahren dahingehend weiterzubilden, dass das Steuersignal in Abhängigkeit von der zeitlichen Abfolge des Erreichens der vorbestimmten Stellung des verschobenen Klemmelements - wie beispielsweise durch das genannte Näherungssignal angezeigt - und des Bereitstellens des Kraft- bzw. Drucksignals erzeugt wird. Mit anderen Worten: Das Steuersignal wird in Abhängigkeit davon erzeugt, ob zuerst das Näherungssignal und anschließend das Kraft- bzw. Drucksignal erzeugt wurde, oder ob zuerst das Kraft- bzw. Drucksignal und anschließend das Näherungssignal erzeugt wurde. Für gegebene Federmittel und für eine unverändert vorgegebene Stellung des verschobenen Klemmelements ist dann beim Lösen der Klemmung in ersterem Fall von einer eingeschränkten Funktionstüchtigkeit der Federmittel auszugehen, während der zweite Fall den Normalfall darstellt.

Beim Schließen der Klemmeinheit zum Bewirken der Klemmung verhält er sich grundsätzlich gerade umgekehrt.

Entsprechend sieht eine Weiterbildung des erfindungsgemäßen Verfahrens vor, dass das Steuersignal eine Funktionsstörung der Klemmeinheit anzeigt, wenn beim Lösen der Klemmung das Kraft- bzw. Drucksignal zeitlich nach dem Erreichen der vorbestimmten Stellung des verschobenen Klemmelements, insbesondere nach dem Erzeugen des entsprechenden Näherungssignals, erzeugt wird, oder wenn beim Schließen der Klemmeinheit zum Bewirken der Klemmung das Kraft- bzw. Drucksignal zeitlich vor dem Erreichen der vorbestimmten Stellung des verschobenen Klemmelements und insbesondere vor dem Erzeugen des betreffenden Näherungssignals erzeugt wird.

Umgekehrt sieht eine andere Weiterbildung des erfindungsgemäßen Verfahrens vor, dass das Steuersignal eine reguläre Funktion der Klemmeinheit anzeigt, wenn beim Lösen der Klemmung das Kraft- bzw. Drucksignal zeitlich vor dem Erreichen der vorbestimmten Stellung des verschobenen Klemmelements, insbesondere vor dem Erzeugen des betreffenden Näherungssignals erzeugt wird, oder wenn beim Schließen der Klemmeinheit zum Bewirken der Klemmung der Kraft- bzw. Drucksignal zeitlich nach dem Erreichen der vorbestimmten Stellung des verschobenen Klemmelements und insbesondere nach dem Erzeugen des betreffenden Näherungssignals erzeugt wird.

Bezogen auf eine spezielle Ausgestaltung der vorliegenden Erfindung, welche der Lösevorgang der Klemmeinheit zur Funktionsüberwachung benutzt, beruht diese demnach auf folgender Überlegung: Bei der Aktivierung einer gattungsgemäßen Klemmeinheit wird durch Druckfreischalten eines vorzugsweise hydraulischen Lösekolbens durch Einwirkung der Federmittel eine Bewegung des äußeren Klemmelements und damit über das Konusklemmsystem aus Außenkonus und Innenkonus die gewünschte Klemmung bewirkt. Das Klemmen kann durch den bereits erwähnten Grenztaster signalisiert werden, welcher mit dem äußeren Klemmelement zusammenwirkt. Zum Lösen der Klemmung ist wieder Druck aufzubauen. Dabei korrespondiert die Federkraft solange mit dem Druck am Lösekolben, bis dieser seinen Anschlag in geöffneter Position erreicht. Bei einem bestimmten Druck, das heißt einer entsprechenden Federkraft wird also eine Stellung des äußeren Klemmelements erreicht, in der der Grenztaster das Signal "Klemmung aktiviert" bzw. "Klemmung deaktiviert" erzeugt.

Bei einer Beschädigung der Federmittel, beispielsweise dem Brechen einer oder mehrerer Federn eines Tellerfederpakets, sinkt die Federkraft. Wird nun bei erfolgter Klemmung der Lösekolben mit Druck beaufschlagt, so wird das Signal des Grenztasters aufgrund der beschädigten Federmittel bei einem entsprechend niedrigeren Druck erzeugt. Überwacht man also den Druck mittels eines Drucksensors oder Druckschalters und stellt diesen auf einen entsprechenden Schwellwert ein, so wird über die zeitliche Reihenfolge der Signale des Druckschalters und des Grenztasters ein Kraftabfall bzw. eine Beschädigung der Federmittel erkennbar. Die vorliegende Erfindung ist jedoch - wie gesagt - nicht auf eine derartige Ausführungsform beschränkt.

Beispielsweise hat gerade das Überwachen der Federkraft beim Schließen der Klemmeinheit zum Bewirken der Klemmung folgenden Vorteil: Im Falle einer Beschädigung eines zwischen dem inneren Klemmelement und dem zu klemmenden Bauteil angeordneten Gleitlagers oder nach erfolgter längerer Klemmung kann es zu einem Anhaften des inneren Klemmelements an dem zu klemmenden Bauteil kommen. Um die entsprechenden Haftkräfte zu überwinden, ist beim Lösen der Klemmeinheit anfangs ein entsprechend erhöhter Druck erforderlich, wobei der von geeigneten Pump- oder Druckspeichermitteln aufzubringende Druck unter Umständen den relevanten Schwellwert kurzfristig übersteigt. Dies könnte zur Folge haben, dass anschließend beim Erreichen der vorbestimmten Stellung des verschobenen Klemmelements aufgrund des bereits erzeugten Drucksignals ein ordnungsgemäßer Betrieb signalisiert wird, obwohl tatsächlich die Federmittel beschädigt sind und der frühzeitig hohe Druck nur durch das erwähnte Anhaften des Klemmelements notwendig bzw. bedingt wurde. Derartige Umstände treten beim Schließen der Klemmeinheit regelmäßig nicht auf, so dass eine entsprechende Ausgestaltung der vorliegenden Erfindung durchaus gewisse Vorzüge besitzt.

Eine andere Weiterbildung der erfindungsgemäßen Klemmeinheit sieht vor, dass die Federmittel als Tellerfedern bzw. als Tellerfederpaket ausgebildet sind.

Wie sich gezeigt hat, sinkt beispielsweise bei Federpaketen mit einer Mehrzahl von Federn beim Bruch einer Feder die Haltekraft der Klemmeinheit unter Umständen nur in einem Maße, welches unter dem Gesichtspunkt der Funktionssicherheit der Klemmeinheit noch zulässig ist. Sobald jedoch ein Abfall der Federkraft auftritt, der unter dem Gesichtspunkt der Funktionssicherheit nicht mehr tolerierbar ist, beispielsweise im Falle einer zweiten gebrochene Feder, wird dies im Rahmen der vorliegenden Erfindung sicher erkannt.

Im Rahmen der vorliegenden Erfindung ist es in jedem Fall möglich, einen kritischen Verlust an Federkraft sicher zu erkennen. Bei welcher Anzahl von defekten Federelementen in einem zusammengesetzten Federmittel dies der Fall ist, ist für den Sicherheitsaspekt unerheblich.

Weitere Eigenschaften und Vorteile der vorliegenden Erfindung ergeben sich aus der nachfolgenden Beschreibung von Ausführungsbeispielen anhand der Zeichnungen.
- Figur 1: zeigt eine schematische Darstellung einer Ausgestaltung der erfin- dungsgemäßen Klemmeneinheit; und
- Figur 2: zeigt grafisch die Abhängigkeit der gemessenen Federkraft von der Stellung des äußeren Klemmelements und entsprechend erzeugte Signale, insbesondere im Bezug auf die Ausgestaltung gemäß Fi- gur 1.

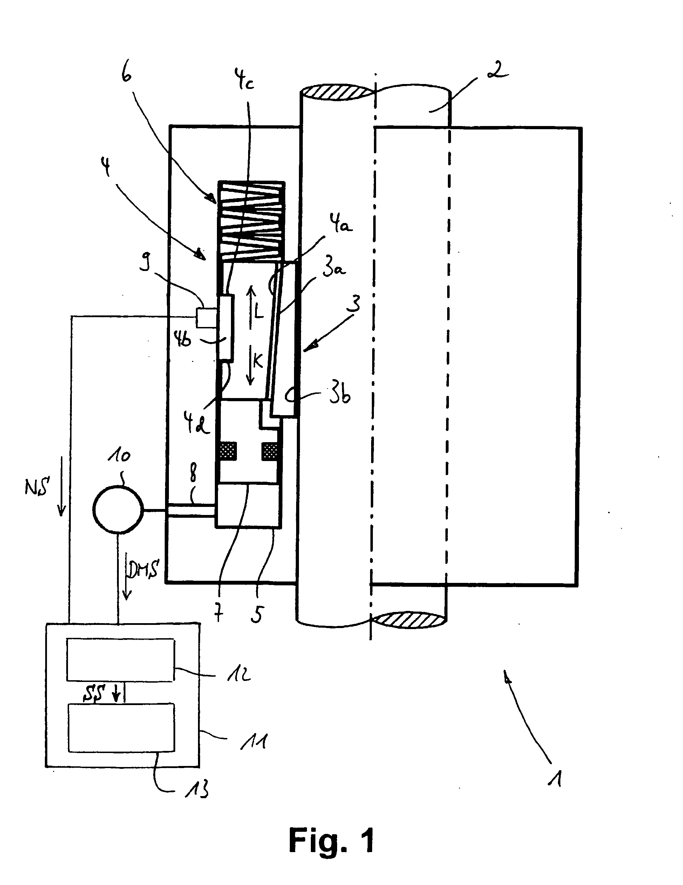

Figur 1 zeigt schematisch eine Ausgestaltung der erfindungsgemäßen Klemmeinheit, vom nicht selbst verstärkenden Typ, bei welcher eine die Klemmung bewirkende Federkraft beim Lösen der Klemmung überwacht wird. Die Klemmeinheit ist insgesamt mit dem Bezugszeichen 1 bezeichnet. Die Klemmeinheit 1 dient zum Klemmen eines bestimmten Bauteils, vorliegend einer Stange 2. Zu diesem Zweck ist an der Stange 2 wenigstens ein erstes, inneres Klemmelement 3 angeordnet, welches die Stange 2 über einen gewissen Teil ihres Umfangs, insbesondere vollumfänglich, umgibt. Das Klemmelement 3 ist als Außenkonus ausgebildet, d. h. seine der Stange 2 abgewandte Außenfläche 3a verläuft schräg bezüglich seiner der Stange 2 zugewandten Innenfläche 3b. Radial außerhalb bezüglich des inneren Klemmelements 3 ist weiterhin wenigstens ein zweites, äußeres Klemmelement 4 vorgesehen, welches das innere Klemmelement 3 zumindest teilweise umgibt. Das äußere Klemmelement 4 ist konischkomplementär bezüglich des inneren Klemmelements 3 ausgebildet und ist dementsprechend als Innenkonus zu bezeichnen. Mit anderen Worten: Die Innenfläche 4a des äußeren Klemmelements 4 verläuft parallel zur Außenfläche 3a des inneren Klemmelements 3. In Figur 1 sind das innere Klemmelement 3 und das äußere Klemmelement 4 jeweils im Längsschnitt dargestellt.

Das äußere Klemmelement 4 ist bezogen auf die Stange 2 axial beweglich (Pfeile L, K) innerhalb eines Zylinderraums 5 angeordnet, welcher die Stange 2 insbesondere torusartig umgibt. Oberhalb des äußeren Klemmelements 4, d. h. an dessen dickerem Ende ist innerhalb des Zylinderraums 5 ein Federmittel in Form einer paketartigen Anordnung aus Tellerfedern 6 angeordnet, welche bestrebt sind, das äußere Klemmelement 4 in Richtung des Pfeils K innerhalb des Zylinderraums 5 relativ zu dem inneren Klemmelement 3 zu verschieben. Unterhalb des äußeren Klemmelements 4 ist in dem Zylinderraum 5 ein Kolben 7 angeordnet. Unterhalb des äußeren Klemmelements 4, d. h. im Bereich des Kolbens 7 weist der Zylinderraum 5 eine Zuleitung 8 für ein Druckmedium, insbesondere ein Hydrauliköl auf, welcher mit einem nicht gezeigten Druckbeaufschlagungsmittel für das Druckmedium in fluidtechnischer Wirkverbindung steht.

Weiterhin ist an einer der Stange 2 abgewandten Wandung des Zylinderraumes 5 im Bereich des äußeren Klemmelements 4 ein Grenztaster 9 vorgesehen, welcher vorliegend als induktiver Näherungsgeber oder Näherungssensor ausgebildet sein kann. Im Bereich des Ortes des Grenztasters 9 weist das äußere Klemmelement 4 eine äußere Ausnehmung 4b auf, welche in axialer Richtung durch so genannte Schaltkanten 4c, 4d begrenzt ist, worauf weiter unten noch genauer eingegangen wird.

Für das durch die Zuleitung 8 dem Zylinderraum 5 zugeführte Druckmedium ist ein Drucksensor 10 vorgesehen, welcher zum Bestimmen des Drucks in dem Druckmedium im Bereich der Zuleitung 8 bzw. im Zylinderraum 5 unterhalb des Kolbens 7 relativ zu einem vorgegebenen Schwell- oder Referenzwert ausgebildet ist. Der Drucksensor 10 steht wie der Grenztaster 9 in signaltechnischer Verbindung mit einer Steuereinheit 11. Letztere weist Auswerte-/Signalerzeugungsmittel 12 und Anzeigemittel 13 auf, auf deren Funktion weiter unten noch genauer eingegangen wird.

Auch auf die Funktion der vorstehend beschriebenen Klemmeinheit 1 wird nachfolgend genauer eingegangen.

Wie der Fachmann erkennt, dient das innere Klemmelement 3 und das äußere Klemmelement 4 zum Klemmen der Stange 2 innerhalb der Klemmeinheit 1, wenn der Zylinderraum 5 im Bereich unterhalb des Kolbens 7 druckfrei geschaltet ist. Dann wird das äußere Klemmelement 4 nach Maßgabe einer durch das Tellerfederpaket 6 bewirkten Federkraft in Richtung des Pfeils K verschoben, so dass das innere Klemmelement 3 und das äußere Klemmelement 4 im Bereich ihrer einander zugewandten Konusflächen 3a, 4a in Anlage treten, wodurch das innere Klemmelement 3 gegen die Stange 2 gepresst wird, so dass die Stange 2 geklemmt wird.

Zum Lösen der Klemmung wird der Zylinderraum 5 unterhalb des Kolbens 7 mit dem unter Druck stehenden Druckmedium beaufschlagt, so dass das äußere Klemmelement 4 durch den Kolben 7, der deshalb auch als Lösekolben bezeichnet wird, entgegen der Federkraft in Richtung des Pfeils L verschoben wird.

Die weiteren in Figur 1 beschriebenen Elemente der erfindungsgemäßen Klemmeinheit 1 dienen zur laufenden Überwachung der für die beabsichtigte Klemmwirkung maßgeblichen Federkraft, das heißt des Funktionszustands des Tellerfederpakets 6. Die Federkraft wird vorliegend.anhand desjenigen Druckes bestimmt, welcher auf den Kolben 7 aufzubringen ist, um diesen bzw. das äußere Klemmelement 4 in Richtung des Pfeils L zu bewegen. Dazu dient der Drucksensor 10, der vorliegend in einfacher Weise als Druckschalter ausgebildet ist, so dass er ein Drucksignal DMS an die Steuereinheit 11 sendet, sobald der Druck im Bereich des Zylinderraums 5 den genannten Schwellwert überschreitet. Dieser korrespondiert mit einer bestimmten Federkraft, welche das Tellerfederpaket 6 seinem Zusammendrücken entgegensetzt. Gleichzeitig bewegt sich das äußere Klemmelement 4 in der Darstellung gemäß Figur 1 nach oben; wobei an einem gewissen Punkt die Schaltkante 4d in den Bereich des Grenztasters 9 gelangt: Diese wird durch den Grenztaster 9 insbesondere induktiv erkannt, und es wird ein entsprechendes Näherungssignal NS ("Klemmung deaktiviert") zu der Steuereinheit 11 gesendet.

Zur Überwachung der Funktion des Tellerfederpakets 6 wird nun die zeitliche Beziehung zwischen dem Eintreffen der Signale DMS und NS bei der Steuereinheit 11 ausgenutzt. Das Näherungssignal NS wird nämlich abhängig von der Bewegung des äußeren Klemmelements 4 und unabhängig von der Funktion des Tellerfederpakets 6 immer dann erzeugt, wenn sich das äußere Klemmelement 4 mit seiner Schaltkante 4d an dem Grenztaster 9 vorbeibewegt, d. h. in einer vorbestimmten Stellung des äußeren Klemmelements 4. Dagegen hängt der Zeitpunkt der Erzeugung des Drucksignals DMS durch den Drucksensor 10 davon ab, wie stark im Zuge der Bewegung des äußeren Klemmelements 4 in Richtung des Pfeils L die Federkraft des Tellerfederpakets 6 und entsprechend der benötigte Druck im Bereich des Kolbens 7 anwächst: Bei einem unbeschädigten und voll funktionsfähigen Tellerfederpaket 6 wird relativ früh bezogen auf die Hubbewegung des äußeren Klemmelements 4 eine gewisse Federkraft, das heißt ein gewisser Druckwert erreicht und entsprechend das Drucksignal DMS erzeugt. Der genannte Druckwert oder Druckschwellwert, bei dem der Drucksensor bzw. Druckschalter 10 auslöst und das Drucksignal DMS erzeugt, ist zweckmäßigerweise so gewählt, dass das Drucksignal DMS bei funktionstüchtigem Tellerfederpaket 6 erzeugt wird, bevor das äußere Klemmelement 4 mit seiner Schaltkante 4d in den Bereich des Grenztasters 9 gelangt. Mit anderen Worten, das Drucksignal DMS trifft vor dem Näherungssignal NS bei der Steuereinheit 11 ein, was durch die Auswerte-/Signal-erzeugungsmittel 12 erkannt und entsprechend zum Erzeugen eines Steuersignals SS für die reguläre Funktion der Klemmeinheit 1 verwendet wird. Das Steuersignal SS wird durch die Anzeigemittel 13 der Steuereinheit 11 angezeigt, beispielsweise in optischer und/oder akustischer Form.

Wenn also das Drucksignal DMS - wie beschrieben - vor dem Näherungssignal NS bei der Steuereinheit 11 eintrifft, wird mittels des Steuersignals SS ein ordnungsgemäßer Betrieb der Klemmeinheit 1 durch die Anzeigemittel 13 angezeigt.

Wenn jedoch eine Anzahl von Tellerfedern in dem Tellerfederpakte 6 beschädigt ist, wird der genannte Druckschwellwert bezogen auf die Hubbewegung des äußeren Klemmelements 4 erst später erreicht. Wenn der genannte Druckwert geeignet gewählt ist, gelangt zunächst die Schaltkante 4d des äußeren Klemmelements 4 in den Bereich des Grenztasters 9, und es wird das Näherungssignal NS erzeugt, bevor der Drucksensor 10 das Drucksignal DMS liefert. Die zeitliche Signalabfolge wird ebenfalls durch die Steuereinheit 11 bzw. deren Auswert/Signalerzeugungsmittel 12 erkannt und zum Erzeugen eines entsprechenden Steuersignals SS verwendet. Dieses wird wiederum durch die Anzeigemittel 13 der Steuereinheit 11 zur Anzeige gebracht und zeigt in diesem Fall einen Ausfall des Tellerfederpakets 6 bzw. der gesamten Klemmeinheit 1 an.

Auf diese Weise erfolgt bei jedem Öffnen der Klemmeinheit 1 eine Überprüfung der Federkraft bzw. der Funktionstüchtigkeit des Tellerfederpakets 6. Grundsätzlich ist jedoch zusätzlich oder alternativ auch beim Schließen der Klemmeinheit 1 eine Überwachung des Drucks und damit der Federkraft möglich, wie weiter oben ausführlich beschrieben.

Ebenfalls alternativ oder zusätzlich zu der vorstehend beschriebenen Ausgestaltung lässt sich natürlich auch die andere Schaltkante 4c des äußeren Klemmelements 4 zum Erzeugen des Näherungssignals NS verwenden. Die Schaltkante 4c korrespondiert mit einer entsprechend geringeren Federkraft bzw. einem entsprechend geringeren Druckwert, so dass der Drucksensor bzw. Druckschalter 10 entsprechend anzupassen ist, wie der Fachmann erkennt.

Weiterhin ist die Erfindung - wie bereits erwähnt - nicht auf die beispielhaft genannte Ausgestaltung des Grenztasters als induktiver Näherungssensor beschränkt. Erforderlich ist lediglich, dass bei einer bestimmten Stellung des äußeren Klemmelements 4 eine Bestimmung der Federkraft relativ zu einem vorgegebenen Schwellwert erfolgt, wobei gemäß der Ausgestaltung in Figur 1 die Federkraft nicht direkt sondern über den Druck innerhalb des Zylinderraums 5 bestimmt wird. Beim Erreichen der genannten vorbestimmten Stellung des äußeren Klemmelements wird vorliegend überprüft, ob die Federkraft bzw. der entsprechende Druck einen vorbestimmten Sollwert bereits erreicht hat oder nicht, woraufhin die Steuereinheit 11 ein entsprechendes Steuersignal SS erzeugt und zur Anzeige bringt. Die Kraft- bzw. Druckbestimmung oder -messung braucht also auch nicht unmittelbar in der vorbestimmten Stellung des äußeren Klemmelements zu erfolgen.

Des Weiteren ist auch der mögliche Ort des Grenztasters 9 nicht gemäß der Ausgestaltung in Figur 1 beschränkt. Wie der Fachmann erkennt, kann der Grenztaster alternativ auch an einem anderen Ort entsprechend dem möglichen Hub des äußeren Klemmelements 4 gemäß dem unteren bzw. oberen Anschlag des Kolbens 7 oder an dem Kolben oder dem Klemmelement selbst angeordnet sein.

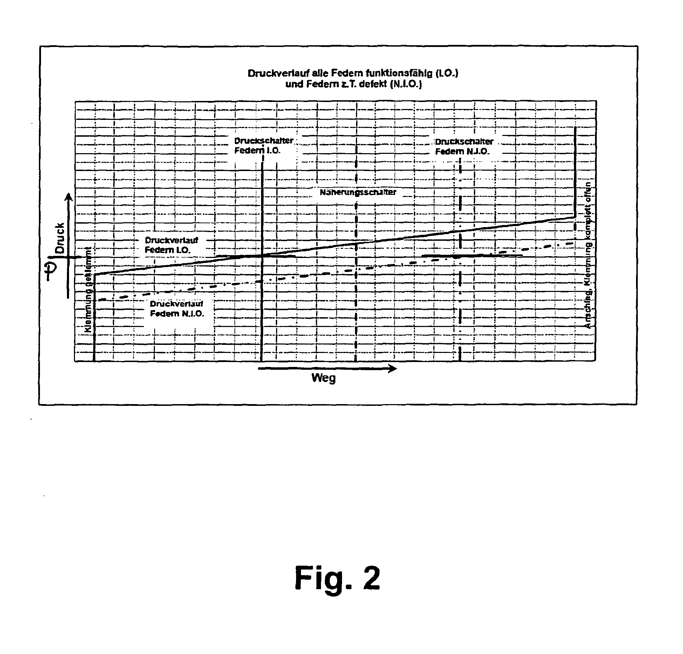

Grundsätzlich ist auch eine absolute Messung der Federkraft insbesondere über den Druck möglich, beispielsweise gleich zu Beginn der Druckbeaufschlagung des Zylinderraums 5 oder unmittelbar beim Erreichen des oberen Kolbenanschlags, so dass insofern auf den Grenztaster 9 sogar verzichtet werden könnte. Figur 2 verdeutlicht anhand einer grafischen Darstellung der Abhängigkeit des Drucks im Zylinderraum 5 unterhalb des Kolbens 7 von der Bewegung des äußeren Klemmelements 4 nochmals die anhand von Figur 1 bereits detailliert erläuterten Zusammenhänge im Falle der Überwachung beim Lösen der Klemmeinheit:

Das Maß der Bewegung des äußeren Klemmelements 4 in Richtung des Pfeils L in Figur 1 ist in Figur 2 auf der Abszisse ("Weg") dargestellt. Der Druck innerhalb des Zylinderraumes 5 und damit die Federkraft sind auf der Ordinate gemäß Figur 2 dargestellt. Die durchgezogene Kurve in Figur 2 entspricht dem idealisierten Druckverlauf für den Fall, dass alle Federn innerhalb des Tellerfederpakets 6 funktionsfähig sind; die strichpunktierte Kurve in Figur 2 entspricht dem Fall, dass die Federn zumindest teilweise defekt sind. Diese Sachverhalte sind in Figur 2 mit "in Ordnung" (I. O.) bzw. nicht in Ordnung" (N. I. O.) bezeichnet.

Die vertikalen, mit Druckschalter Federn" bezeichneten Linien in Figur 2 geben die Stellung des äußeren Klemmelements 4 entlang seiner Hubbewegung an, bei welcher der Druckschalter 10 bzw. der Grenztaster 9 jeweils auslöst (schaltet). Die linke, durchgezogene vertikale Linie in Figur 2 gibt das Schalten des Druckschalters für den Fall eines unbeschädigten Tellerfederpakts an, während die rechte vertikale Linie in Figur 2 das Schalten des Druckschalters für den Fall eines beschädigten Tellerfederpakets angibt. Das Auslösen des Grenztasters 9 ist davon unabhängig (mittlere vertikale Linie "Näherungsschalter" in Figur 2).

Der steile Abfall der Kurven im linken Teil von Figur 2 symbolisiert das Druckfreischalten des Zylinderraums 5 im Falle vollständiger Klemmung. Der steile Anstieg der Kurven im rechten Teil der Figur 2 entspricht dem oberen Anschlag des äußeren Klemmelements 4, das heißt Klemmung komplett offen.

Wie sich der Figur 2 nun leicht entnehmen lässt, schaltet im Falle des funktionsfähigen Tellerfederpakets zunächst der Druckschalter und anschließend der Grenztaster, wobei die Druckschwelle zum Auslösen des Druckschalters in Figur 2 mit P bezeichnet ist.

Wenn jedoch das Tellerfederpakt zumindest teilweise defekt ist, schaltet zunächst der Grenztaster und erst später - beim Erreichen der Druckschwelle P - der Druckschalter. Somit ergibt sich in einfacher Weise aus der Signalfolge eine steuerungstechnisch auswertbare Information darüber, ob das Tellerfederpaket noch funktionsfähig ist oder nicht.

Grundsätzlich ist der vorstehend beschriebene Verfahrensablauf gleichwertig zu einer Bestimmung der Federkraft bei einer vorbestimmten Stellung des äußeren Klemmelements, denn es wird ermittelt, ob die Federkraft bei einer bestimmten Stellung des äußeren Klemmelements, welche vorliegend durch das Auslösen des Grenztasters angezeigt wird, bereits einen bestimmten Sollwert erreicht hat (Fall "I. O.") oder nicht (Fall "N. I. O.").

Im Falle einer Überwachung des Drucks während des Schließvorgangs zum Klemmen des Bauteils laufen die oben beschriebenen Vorgänge grundsätzlich gerade umgekehrt ab.

Die Bestimmung der Federkraft über den Druck ist besonders einfach, kostengünstig und daher zweckmäßig. Die Überwachung des Schließvorgangs hat möglicherweise aufgrund der beschriebenen Haftproblematik gewisse Vorteile gegenüber einer Überwachung des Lösevorgangs.

## Patentansprüche

1. Verfahren zum Überwachen einer Klemmung bewirkenden Federkraft bei einer Klemmeinheit (1) für ein zu klemmendes Bauteil (2), insbesondere Stange, mit einem an dem zu klemmenden Bauteil angeordneten inneren Klemmelement (3) und mit einem koaxial zu dem inneren Klemmelement angeordneten und mit dem inneren Klemmelement selektiv klemmend zusammenwirkenden äußeren Klemmelement (4), wobei das äußere Klemmelement (4) und/oder das innere Klemmelement (3) relativ zu dem jeweils anderen Klemmelement zum Lösen (L) der Klemmeinheit gegen die Klemmung bewirkende Federmittel (6) oder zum Schließen (K) der Klemmeinheit durch die genannten Federmittel axial verschoben wird,
**dadurch gekennzeichnet,**
**dass** beim axialen Verschieben des inneren Klemmelements und/oder des äußeren Klemmelements in einer vorbestimmten Stellung des verschobenen Klemmelements (4) die Federkraft der Federmittel (6) relativ zu einem vorgegebenen Schwellwert (P) bestimmt wird und dass zumindest bei Unterschreiten des Schwellwerts für die Federkraft ein Steuersignal (SS) zum Anzeigen eines Betriebszustands, insbesondere einer Funktionsstörung, der Klemmeinheit (1) erzeugt wird.

2. Verfahren nach Anspruch 1,
**dadurch gekennzeichnet,**
**dass** die vorbestimmte Stellung des äußeren Klemmelements (4) durch einen Grenztaster (9), insbesondere einen induktiven Nährungsschalter, angezeigt wird, welcher ein entsprechendes Näherungssignal (NS) bereitstellt.

3. Verfahren nach Anspruch 1 oder 2,
**dadurch gekennzeichnet,**
**dass** die Federkraft insbesondere zeitlich unabhängig von dem Erreichen der vorbestimmten Stellung des äußeren Klemmelements (4) bestimmt wird.

4. Verfahren nach mindestens einem der Ansprüche 1 bis 3,
**dadurch gekennzeichnet,**
**dass** die Federkraft durch eine Kraftbestimmungseinrichtung bestimmt wird, welche beim Erreichen des vorgegebenen Schwellwerts ein entsprechendes Kraftsignal bereitstellt.

5. Verfahren nach mindestens einem der Ansprüche 1 bis 4,
**dadurch gekennzeichnet,**
**dass** die Federkraft durch eine Druckbestimmungseinrichtung (10) bestimmt wird, welche beim Erreichen des vorgegebenen Schwellwerts (P) ein entsprechendes Drucksignal (DMS) bereitstellt.

6. Verfahren nach Anspruch 4 oder 5,
**dadurch gekennzeichnet,**
**dass** das Steuersignal (SS) in Abhängigkeit von der zeitlichen Abfolge des Erreichens der vorbestimmten Stellung des äußeren Klemmelements (4) und des Bereitstellens des Kraft- bzw. Drucksignals (DMS) erzeugt wird.

7. Verfahren nach Anspruch 6,
**dadurch gekennzeichnet,**
**dass** das Steuersignal (SS) eine Funktionsstörung der Klemmeinheit (1) anzeigt, wenn beim Lösen der Klemmung das Kraft- bzw. Drucksignal (DMS) zeitlich nach dem Erreichen der vorbestimmten Stellung des verschobenen Klemmelements (4), insbesondere nach dem Erzeugen des Näherungssignals (NS) gemäß Anspruch 2, erzeugt wird, oder wenn beim Schließen der Klemmeinheit (1) zum Bewirken der Klemmung das Kraft- bzw. Drucksignal (DMS) zeitlich vor dem Erreichen der vorbestimmten Stellung des verschobenen Klemmelements (4), insbesondere vor dem Erzeugen des Näherungssignals (NS) gemäß Anspruch 2, erzeugt wird.

8. Verfahren nach Anspruch 6 oder 7,
**dadurch gekennzeichnet,**
**dass** das Steuersignal (SS) eine reguläre Funktion der Klemmeinheit (1) anzeigt, wenn beim Lösen der Klemmung das Kraft- bzw. Drucksignal (DMS) zeitlich vor dem Erreichen der vorbestimmten Stellung des verschobenen Klemmelements (4), insbesondere vor dem Erzeugen des Näherungssignals (NS) gemäß Anspruch 2, erzeugt wird, oder wenn beim Schließen der Klemmeinheit (1) zum Bewirken der Klemmung der Kraft- bzw. Drucksignal (DMS) zeitlich nach dem Erreichen der vorbestimmten Stellung des verschobenen Klemmelements (4), insbesondere nach dem Erzeugen des Näherungssignals (NS) gemäß Anspruch 2, erzeugt wird.

9. Klemmeinheit (1) für ein zu klemmendes Bauteil (2), insbesondere Stange, mit einem an dem zu klemmenden Bauteil angeordneten inneren Klemmelement (3), welches insbesondere als Außenkonus ausgebildet ist, und mit einem koaxial zu dem inneren Klemmelement angeordneten und mit dem inneren Klemmelement selektiv klemmend zusammenwirkenden äußeren Klemmelement (4), welches insbesondere als zu dem Außenkonus komplementärer Innenkonus ausgebildet ist, wobei das äußere Klemmelement (4) und/oder das innere Klemmelement (3) relativ zu dem jeweils anderen Klemmelement zum Lösen der Klemmeinheit gegen die Klemmung bewirkende Federmittel (6) oder zum Schließen der Klemmeinheit durch die genannten Federmittel axial verschiebbar ist,
**gekennzeichnet durch**
Federkraftbestimmungsmittel (10) zum Bestimmen der Federkraft relativ zu einem vorgegebenen Schwellwert (P) in einer vorbestimmten Stellung des verschobenen Klemmelements (4) beim axialen Verschieben (L) des inneren Klemmelements (3) und/oder des äußeren Klemmelements und **durch** Mittel (12) zum Erzeugen eines Steuersignals (SS) zum Anzeigen eines Betriebszustands, insbesondere einer Funktionsstörung, zumindest bei einem Unterschreiten des Schwellwerts (P) für die Federkraft.

10. Klemmeinheit (1) nach Anspruch 9, **gekennzeichnet durch** Mittel (4d, 9) zum Erzeugen eines zu Steuerungszwecken nutzbaren Näherungssignals (NS) bei Erreichen der vorbestimmten Stellung des äußeren Klemmelements (4), welche vorzugsweise als insbesondere induktiver Näherungsschalter ausgebildet sind.

11. Klemmeinheit (1) nach Anspruch 9 oder 10,
**dadurch gekennzeichnet,**
**dass** die Federmittel (6) als Tellerfedern ausgebildet sind.

12. Klemmeinheit (1) nach mindestens einem der Ansprüche 9 bis 11,
**dadurch gekennzeichnet,**
**dass** die Federkraftbestimmungsmittel als Kraftbestimmungseinrichtung ausgebildet sind, welche zum Bereitstellen eines entsprechenden Kraftsignals beim Erreichen des vorgegebenen Schwellwerts eingerichtet ist.

13. Klemmeinheit (1) nach mindestens einem der Ansprüche 9 bis 12,
**dadurch gekennzeichnet,**
**dass** die Federkraftbestimmungsmittel als Druckbestimmungseinrichtung (10) ausgebildet sind, welche zum Bereitstellen eines entsprechenden Drucksignals (DMS) beim Erreichen des vorgegebenen Schwellwerts (P) eingerichtet ist.

14. Klemmeinheit (1) nach Anspruch 12 oder 13,
**dadurch gekennzeichnet,**
**dass** die Steuersignalerzeugungsmittel (12) dazu eingerichtet sind, das Steuersignal (SS) in Abhängigkeit von der zeitlichen Abfolge des Erreichens der vorbestimmten Stellung des äußeren Klemmelements (4) und des Bereitstellens des Kraft- bzw. Drucksignals (DMS) zu erzeugen.

15. Klemmeinheit (1) nach Anspruch 14,
**dadurch gekennzeichnet,**
**dass** die Steuersignalerzeugungsmittel (12) dazu eingerichtet sind, über das Steuersignal (SS) eine Funktionsstörung der Klemmeinheit (1) anzuzeigen, wenn das Kraft- bzw. Drucksignal (DMS) zeitlich nach dem Erreichen der vorbestimmten Stellung des verschobenen Klemmelements (4), insbesondere nach dem Erzeugen des Näherungssignals (NS) gemäß Anspruch 10, erzeugt wurde, oder wenn beim Schließen der Klemmeinheit (1) zum Bewirken der Klemmung das Kraft- bzw. Drucksignal (DMS) zeitlich vor dem Erreichen der vorbestimmten Stellung des verschobenen Klemmelements (4), insbesondere vor dem Erzeugen des Näherungssignals (NS) gemäß Anspruch 10, erzeugt wurde.

16. Klemmeinheit (1) nach Anspruch 14 oder 15,
**dadurch gekennzeichnet,**
**dass** die Steuersignalerzeugungsmittel (12) dazu eingerichtet sind, über das Steuersignal (SS) eine reguläre Funktion der Klemmeinheit (1) anzuzeigen, wenn das Kraft- bzw. Drucksignal (DMS) zeitlich vor dem Erreichen der vorbestimmten Stellung des verschobenen Klemmelements (4), insbesondere vor dem Erzeugen des Näherungssignals (NS) gemäß Anspruch 10, erzeugt wurde, oder wenn beim Schließen der Klemmeinheit (1) zum Bewirken der Klemmung das Kraft- bzw. Drucksignal (DMS) zeitlich nach dem Erreichen der vorbestimmten Stellung des verschobenen Klemmelements (4), insbesondere nach dem Erzeugen des Näherungssignals (NS) gemäß Anspruch 10 erzeugt wurde.

## Claims

1. Method of monitoring a spring force effecting a clamping action in a clamping unit (1) for a component (2) to be clamped, especially a rod, having an inner clamping element (3) arranged on the component to be clamped and having an outer clamping element (4), which is arranged coaxially with respect to the inner clamping element and co-operates with the inner clamping element to effect a selective clamping action, the outer clamping element (4) and/or the inner clamping element (3) being displaced axially relative to the respective other clamping element to release (L) the clamping unit with respect to the spring means (6) effecting the clamping action or to close (K) the clamping unit by means of the mentioned spring means,
**characterised in that**
on axial displacement of the inner clamping element and/or the outer clamping element, in a predetermined position of the displaced clamping element (4) the spring force of the spring means (6) relative to a preset threshold value (P) is determined and, at least when the spring force falls short of the threshold value, a control signal (SS) is generated to indicate an operating state, especially a malfunction, of the clamping unit (1).

2. Method according to claim 1,
**characterised in that**
the predetermined position of the outer clamping element (4) is indicated by a limit switch (9), especially an inductive proximity switch, which supplies a corresponding proximity signal (NS).

3. Method according to claim 1 or 2,
**characterised in that**
the spring force is determined especially independently of the time at which the outer clamping element (4) reaches the predetermined position.

4. Method according to at least one of claims 1 to 3,
**characterised in that**
the spring force is determined by a force-determining device which supplies a corresponding force signal when the preset threshold value is reached.

5. Method according to at least one of claims 1 to 4,
**characterised in that**
the spring force is determined by a pressure-determining device (10) which supplies a corresponding pressure signal (DMS) when the preset threshold value (P) is reached.

6. Method according to claim 4 or 5,
**characterised in that**
the control signal (SS) is generated in dependence upon the chronological order in which the outer clamping element (4) reaches the predetermined position and the force/pressure signal (DMS) is supplied.

7. Method according to claim 6,
**characterised in that**
the control signal (SS) indicates a malfunction of the clamping unit (1) if, on release of the clamping action, the force/pressure signal (DMS) is generated at a point in time after the displaced clamping element (4) has reached the predetermined position, especially after the proximity signal (NS) according to claim 2 has been generated, or if, on closure of the clamping unit (1) to effect the clamping action, the force/pressure signal (DMS) is generated at a point in time before the displaced clamping element (4) has reached the predetermined position, especially before the proximity signal (NS) according to claim 2 has been generated.

8. Method according to claim 6 or 7,
**characterised in that**
the control signal (SS) indicates normal operation of the clamping unit (1) if, on release of the clamping action, the force/pressure signal (DMS) is generated at a point in time before the displaced clamping element (4) reaches the predetermined position, especially before the proximity signal (NS) according to claim 2 is generated, or if, on closure of the clamping unit (1) to effect the clamping action, the force/pressure signal (DMS) is generated at a point in time after the displaced clamping element (4) has reached the predetermined position, especially after the proximity signal (NS) according to claim 2 has been generated.

9. Clamping unit (1) for a component (2) to be clamped, especially a rod, having an inner clamping element (3) arranged on the component to be clamped, which inner clamping element is especially in the form of an external cone, and having an outer clamping element (4), which is arranged coaxially with respect to the inner clamping element and co-operates with the inner clamping element to effect a selective clamping action, which outer clamping element is especially in the form of an internal cone complementary to the external cone, the outer clamping element (4) and/or the inner clamping element (3) being displaceable axially relative to the respective other clamping element to release the clamping unit with respect to the spring means (6) effecting the clamping action or to close the clamping unit by means of the mentioned spring means,
**characterised by**
spring-force-determining means (10) for determining the spring force relative to a preset threshold value (P) in a predetermined position of the displaced clamping element (4) on axial displacement (L) of the inner clamping element (3) and/or of the outer clamping element and by means (12) for generating a control signal (SS) to indicate an operating state, especially a malfunction, at least when the spring force falls short of the threshold value (P).

10. Clamping unit (1) according to claim 9, **characterised by** means (4d, 9) for generating a proximity signal (NS) usable for control purposes when the outer clamping element (4) reaches the
predetermined position, which means are preferably in the form of a proximity switch, especially an inductive proximity switch.

11. Clamping unit (1) according to claim 9 or 10,
**characterised in that**
the spring means (6) are in the form of cup springs.

12. Clamping unit (1) according to at least one of claims 9 to 11,
**characterised in that**
the spring-force-determining means are in the form of a force-determining device which is arranged to supply a corresponding force signal when the preset threshold value is reached.

13. Clamping unit (1) according to at least one of claims 9 to 12,
**characterised in that**
the spring-force-determining means are in the form of a pressure-determining device (10) which is arranged to supply a corresponding pressure signal (DMS) when the preset threshold value (P) is reached.

14. Clamping unit (1) according to claim 12 or 13,
**characterised in that**
the control-signal-generating means (12) are arranged to generate the control signal (SS) in dependence upon the chronological order in which the outer clamping element (4) reaches the predetermined position and the force/pressure signal (DMS) is supplied.

15. Clamping unit (1) according to claim 14,
**characterised in that**
the control-signal-generating means (12) are arranged to indicate, by way of the control signal (SS), a malfunction of the clamping unit (1) if the force/pressure signal (DMS) was generated at a point in time after the displaced clamping element (4) reached the predetermined position, especially after the proximity signal (NS) according to claim 10 was generated, or if, on closure of the clamping unit (1) to effect the clamping action, the force/pressure signal (DMS) was generated at a point in time before the displaced clamping element(4) reached the predetermined position, especially before the proximity signal (NS) according to claim 10 was generated.

16. Clamping unit (1) according to claim 14 or 15.
**characterised in that**
the control-signal-generating means (12) are arranged to indicate, by way of the control signal (SS), normal operation of the clamping unit (1) if the force/pressure signal (DMS) was generated at a point in time before the displaced clamping element (4) reached the predetermined position, especially before the proximity signal (NS) according to claim 10 was generated, or if, on closure of the clamping unit (1) to effect the clamping action, the force/pressure signal (DMS) was generated at a point in time after the displaced clamping element (4) reached the predetermined position, especially after the proximity signal (NS) according to claim 10 was generated.

## Revendications

1. Procédé de surveillance d'une force élastique provoquant un serrage sur une unité de serrage (1) pour un composant (2) à serrer, en particulier une tige, avec un élément de serrage intérieur (3) disposé sur le composant à serrer et avec un élément de serrage extérieur (4) disposé coaxialement à l'élément de serrage intérieur et coopérant sélectivement en serrage avec l'élément de serrage intérieur, l'élément de serrage extérieur (4) et/ou l'élément de serrage intérieur (3) étant déplacé axialement par rapport à l'autre élément de serrage respectif pour desserrer (L) l'unité de serrage contre les moyens élastiques (6) provoquant le serrage ou pour fermer (K) l'unité de serrage par lesdits moyens élastiques,
**caractérisé en ce**
**que** lors du déplacement axial de l'élément de serrage intérieur et/ou de l'élément de serrage extérieur, la force élastique des moyens élastiques (6) par rapport à une valeur seuil (P) prédéfinie est déterminée dans une position prédéterminée de l'élément de serrage (4) déplacé et qu'un signal de commande (SS) pour afficher un état de fonctionnement, en particulier un dysfonctionnement, de l'unité de serrage (1) est généré au moins lorsque la valeur seuil de la force élastique est dépassée vers le bas.

2. Procédé selon la revendication 1,
**caractérisé en ce**
**que** la position prédéterminée de l'élément de serrage extérieur (4) est indiquée par un interrupteur-limiteur (9), en particulier un détecteur de proximité inductif, qui délivre un signal de proximité (NS) correspondant.

3. Procédé selon la revendication 1 ou 2,
**caractérisé en ce**
**que** la force élastique est déterminée en particulier indépendamment de l'instant où l'élément de serrage extérieur (4) atteint la position prédéterminée.

4. Procédé selon au moins une des revendications 1 à 3,
**caractérisé en ce**
**que** la force élastique est déterminée par un dispositif de détermination de force qui délivre un signal de force correspondant quand la valeur seuil prédéfinie est atteinte.

5. Procédé selon au moins une des revendications 1 à 4,
**caractérisé en ce**
**que** la force élastique est déterminée par un dispositif de détermination de pression (10) qui délivre un signal de pression correspondant (DMS) quand la valeur seuil prédéfinie (P) est atteinte.

6. Procédé selon la revendication 4 ou 5,
**caractérisé en ce**
**que** le signal de commande (SS) est généré en fonction de la succession dans le temps de l'atteinte de la position prédéterminée de l'élément de serrage extérieur (4) et de la délivrance du signal de force ou de pression (DMS).

7. Procédé selon la revendication 6,
**caractérisé en ce**
**que** le signal de commande (SS) indique un dysfonctionnement de l'unité de serrage (1) quand, lors du desserrage, le signal de force ou de pression (DMS) est généré dans le temps après l'atteinte de la position prédéterminée de l'élément de serrage déplacé (4), en particulier après la génération du signal de proximité (NS) selon la revendication 2, ou quand, lors de la fermeture de l'unité de serrage (1) pour provoquer le serrage, le signal de force ou de pression (DMS) est généré dans le temps avant l'atteinte de la position prédéterminée de l'élément de serrage déplacé (4), en particulier avant la génération du signal de proximité (NS) selon la revendication 2.

8. Procédé selon la revendication 6 ou 7,
**caractérisé en ce**
**que** le signal de commande (SS) indique un fonctionnement normal de l'unité de serrage (1) quand, lors du desserrage, le signal de force ou de pression (DMS) est généré dans le temps avant l'atteinte de la position prédéterminée de l'élément de serrage déplacé (4), en particulier avant la génération du signal de proximité (NS) selon la revendication 2, ou quand, lors de la fermeture de l'unité de serrage (1) pour provoquer le serrage, le signal de force ou de pression (DMS) est généré dans le temps après l'atteinte de la position prédéterminée de l'élément de serrage déplacé (4), en particulier après la génération du signal de proximité (NS) selon la revendication 2.

9. Unité de serrage (1) pour un composant à serrer (2), en particulier une tige, avec un élément de serrage intérieur (3) disposé sur le composant à serrer, lequel est réalisé en particulier sous la forme d'un cône extérieur, et avec un élément de serrage extérieur (4) disposé coaxialement à l'élément de serrage intérieur et coopérant sélectivement en serrage avec l'élément de serrage intérieur, lequel est réalisé en particulier sous la forme d'un cône intérieur complémentaire au cône extérieur, l'élément de serrage extérieur (4) et/ou l'élément de serrage intérieur (3) étant déplaçable axialement par rapport à l'autre élément de serrage respectif pour desserrer l'unité de serrage contre les moyens élastiques (6) provoquant le serrage ou pour fermer l'unité de serrage par lesdits moyens élastiques,
**caractérisée par**
des moyens de détermination de la force élastique (10) pour déterminer la force élastique par rapport à une valeur seuil prédéfinie (P) dans une position prédéterminée de l'élément de serrage déplacé (4) lors du déplacement axial (L) de l'élément de serrage intérieur (3) et/ou de l'élément de serrage extérieur et par des moyens (12) pour générer un signal de commande (SS) pour afficher un état de fonctionnement, en particulier un dysfonctionnement, au moins lorsque la valeur seuil (P) de la force élastique est dépassée vers le bas.

10. Unité de serrage (1) selon la revendication 9,
**caractérisée par** des moyens (4d, 9) pour générer un signal de proximité (NS) utilisable à des fins de commande lors de l'atteinte de la position prédéterminée de l'élément de serrage extérieur (4), lesquels sont de préférence réalisés sous la forme d'un détecteur de proximité en particulier inductif.

11. Unité de serrage (1) selon la revendication 9 ou 10,
**caractérisée en ce**
**que** les moyens élastiques (6) sont réalisés sous la forme de ressorts à diaphragme.

12. Unité de serrage (1) selon au moins une des revendications 9 à 11,
**caractérisée en ce**
**que** les moyens de détermination de la force élastique sont réalisés sous la forme d'un dispositif de détermination de force qui est conçu pour délivrer un signal de force correspondant quand la valeur seuil prédéfinie est atteinte.

13. Unité de serrage (1) selon au moins une des revendications 9 à 12,
**caractérisée en ce**
**que** les moyens de détermination de la force élastique sont réalisés sous la forme d'un dispositif de détermination de pression (10) qui est conçu pour délivrer un signal de pression correspondant (DMS) quand la valeur seuil prédéfinie (P) est atteinte.

14. Unité de serrage (1) selon la revendication 12 ou 13,
**caractérisée en ce**
**que** les moyens de génération du signal de commande (12) sont conçus pour générer le signal de commande (SS) en fonction de la succession dans le temps de l'atteinte de la position prédéterminée de l'élément de serrage extérieur (4) et de la délivrance du signal de force ou de pression (DMS).

15. Unité de serrage (1) selon la revendication 14,
**caractérisée en ce**
**que** les moyens de génération du signal de commande (12) sont conçus pour indiquer un dysfonctionnement de l'unité de serrage (1) au moyen du signal de commande (SS) quand le signal de force ou de pression (DMS) a été généré dans le temps après l'atteinte de la position prédéterminée de l'élément de serrage déplacé (4), en particulier après la génération du signal de proximité (NS) selon la revendication 10, ou quand, lors de la fermeture de l'unité de serrage (1) pour provoquer le serrage, le signal de force ou de pression (DMS) a été généré dans le temps avant l'atteinte de la position prédéterminée de l'élément de serrage déplacé (4), en particulier avant la génération du signal de proximité (NS) selon la revendication 10.

16. Unité de serrage (1) selon la revendication 14 ou 15,
**caractérisée en ce**
**que** les moyens de génération du signal de commande (12) sont conçus pour indiquer un fonctionnement normal de l'unité de serrage (1) au moyen du signal de commande (SS) quand le signal de force ou de pression (DMS) a été généré dans le temps avant l'atteinte de la position prédéterminée de l'élément de serrage déplacé (4), en particulier avant la génération du signal de proximité (NS) selon la revendication 10, ou quand, lors de la fermeture de l'unité de serrage (1) pour provoquer le serrage, le signal de force ou de pression (DMS) a été généré dans le temps après l'atteinte de la position prédéterminée de l'élément de serrage déplacé (4), en particulier après la génération du signal de proximité (NS) selon la revendication 10.
